# EUROPÄISCHE PATENTSCHRIFT

(11) **EP 1 900 578 B1**
(45) Veröffentlichungstag und Bekanntmachung des Hinweises auf die Patenterteilung: **10.11.2010**
(21) Anmeldenummer: 07115034.6
(22) Anmeldetag: 27.08.2007
(51) Int. Cl.: B60R 25/00, G07C 9/00

(54) **Zugangsanordnung für ein Fahrzeug**
Access assembly for a vehicle
Agencement d'accès pour un véhicule

(30) Priorität: 13.09.2006 DE 102006042943
(43) Veröffentlichungstag der Anmeldung: 19.03.2008
(73) Patentinhaber: Continental Automotive GmbH, 30165 Hannover (DE)
(72) Erfinder: Huschenbett, Matthias, 93057 Regensburg (DE); Meckl, Stefan, 93095 Hagelstadt (DE); Wagner, Roland, 93093 Donaustauf (DE); Weber, Florian, 93047 Regensburg (DE)

(56) Entgegenhaltungen:
- EP-A- 1 512 590
- DE-B3-102004 039 835

## Beschreibung

Die vorliegende Erfindung betrifft eine Zugangsanordnung bzw. eine Identifikationsanordnung für ein Fahrzeug sowie ein Verfahren zum Betreiben einer derartigen Anordnung.

In heutigen Fahrzeugen bzw. Kraftfahrzeugen sind im zunehmenden Maße immer mehr elektronische Zugangsberechtigungssysteme vorgesehen, bei dem die Zugangsberechtigungsanfrage mittels einer Fernbedienung eingeleitet wird. Im einfachsten Falle besteht dieses Zugangsberechtigungssystem aus einem oder mehreren elektronisch steuerbaren Schlössern, einer Steuerung und zumindest einem dazu gehörigen elektronischen Schlüssel, also der Fernbedienung.

Moderne und zukünftige Zugangsberechtigungssysteme bzw. Zugangsanordnungen in Kraftfahrzeugen verwenden elektronische Sicherungssysteme, beispielsweise unter Verwendung der Transpondertechnik. Vor dem Öffnen bzw. der Inbetriebnahme des Kraftfahrzeugs erfolgt hierzu zunächst eine drahtlose Datenkommunikation zwischen einem im Kraftfahrzeug angeordneten Transceiver und einem beispielsweise in einem Schlüssel oder Schlüsselanhänger des Kraftfahrzeugnutzers angeordneten Transponder, bei der kodierte Daten ausgetauscht werden, die eine gültige Zugangsberechtigung, beispielsweise durch den Kraftfahrzeugbesitzer, sicherstellt. Ein solches Zugangsberechtigungssystem ist beispielsweise das von der Firma Siemens VDO entwickelte und vertriebene PASE-System, wobei PASE für "Passive Access Start and Entry" steht. Eine Zugangsberechtigungsanfrage wird hier beispielsweise durch ein Betätigen eines Türgriffs oder lediglich durch das Annähern an das Kraftfahrzeug initiiert. Da hier kein aktives Betätigen eines mechanischen oder elektronischen Schlüssels vorgenommen werden muss, wird diese Art der Zugangsberechtigung auch als passive Zugangsberechtigungsanfrage, die entsprechenden Schließsysteme als passive elektronische Zugangsberechtigungssysteme bezeichnet.

Bisweilen besteht der Bedarf, ein bestehendes schlüsselloses elektronisches Zugangsberechtigungssystem, das nicht über ein passives Zugangssystemberechtigungssystem, wie das vorstehend genannte PASE-System, verfügt, mit eben einem solchen passiven Zugangsberechtigungssystem nachzurüsten. Bei bekannten Systemen ist zum Nachrüsten eines passiven Zugangsberechtigungssystems fahrzeugseitig, insbesondere in zumindest einer Fahrzeugtür, ein Sender bereit zu stellen, der den elektronischen Schlüssel für das passive Zugangsberechtigungssystem (PASE-Schlüssel) sucht. Ferner ist fahrzeugseitig ein entsprechender Empfänger anzuordnen, der mit der Zentralverriegelung des bisherigen Systems elektrisch gekoppelt ist und der nach einer positiven Auswertung der Datenkommunikation mit dem PASE-Schlüssel ein entsprechendes Steuersignal an die Zentralverriegelung, mit der er elektronisch gekoppelt ist, sendet. Ein derartiges nachrüstbares passives Zugangsberechtigungssystem ist beispielsweise aus der DE 10 2004 039 835 B3 bekannt.

In der genannten Schrift wird dargestellt, wie ein Fahrzeugnutzer zu dem mit einem passiven Zugangsberechtigungssystem nachgerüsteten Fahrzeug Zugang erhalten kann. Jedoch wird hier nicht der Aspekt beleuchtet, was geschieht, wenn der Fahrzeugnutzer beispielsweise nach Abstellen des Fahrzeugs, dieses verlässt. Zum Einen kann dabei der Fall auftreten, dass ein elektronischer Schlüssel für den passiven Zugang im Fahrzeug liegen bleibt, während mittels eines zweiten Schlüssels aufgrund einer Betätigung einer Verriegelungstaste dieses Schlüssels ein Signal zum Verriegeln des Fahrzeugs gegeben wird. Es ist auch denkbar, dass durch 0einen anderen Mechanismus eine Verriegelung des Fahrzeugs durchgeführt wird. Bei herkömmlichen passiven Zugangsberechtigungssystemen wird zum Deaktivieren derartiger im Fahrzeug liegen gebliebener elektronischer Schlüssel nach der Verriegelung ein spezielles im Wesentlichen auf den Innenraum begrenztes Sperrsignal oder Deaktivierungssignal gesendet, um die im Fahrzeug liegen gebliebenen elektronischen Schlüssel zumindest für eine bestimmte Zeit zu sperren bzw. zu deaktivieren. Bei einem nachgerüsteten passiven Zugangsberechtigungssystem wird, wie oben kurz angedeutet, die nachgerüstete fahrzeugseitige Sendeeinheit zum Aussenden von Anfragesignalen an den elektronischen Schlüssel insbesondere in einer Fahrzeugtür vorgesehen. Aufgrund dessen ist es somit schwierig, ein im Wesentlichen auf den Innenraum begrenztes Sperrsignal auszusenden, ohne außerhalb des Fahrzeugs befindliche elektronische Schlüssel ungewollter Weise zu sperren bzw. zu deaktivieren.

Somit besteht die Aufgabe der vorliegenden Erfindung darin, eine insbesondere nachrüstbare Zugangsanordnung bzw. ein Verfahren zum Betreiben einer solchen zu schaffen, welche die dargestellten Probleme des Stands der Technik löst und eine verbesserte Sicherheit gewährleistet.

Diese Aufgabe wird durch die unabhängigen Ansprüche gelöst. Vorteilhafte Ausgestaltungen sind Gegenstand der Unteransprüche.

Dabei umfasst eine Zugangsanordnung bzw. eine Identifizierungsanordnung für ein Fahrzeug, durch die der Zugang zu dem Fahrzeug steuerbar ist, folgende Merkmale. Es ist eine fahrzeugseitige Sende-/Empfangseinrichtung zum Aussenden einer vorbestimmten Anzahl von fahrzeugseitigen Signalen bzw. Abfragesignalen verschiedenen Zwecks vorgesehen. Dabei können die Abfragesignale bestimmte Informationen umfassen, wie beispielsweise die Art bzw. den Zweck und/oder eine Signalnummer. Im vorliegenden Fall kann der Zweck das Verlassen des Fahrzeugs seitens des Fahrers bzw. Benutzers sein, bei dem beispielsweise eine Deaktivierung eines im Fahrzeug liegen gebliebenen mobilen Identifikationsgebers gewünscht ist. Die Zugangsanordnung umfasst außerdem zumindest einen mobilen Identifikationsgeber bzw. eine tragbare Benutzeridentifizierungsvorrichtung mit einer identifikationsgeberseitigen Sende-/Empfangseinrichtung zum Empfangen von Abfragesignalen von der fahrzeugseitigen Sende-/Empfangseinrichtung, und zum Zählen der Anzahl von empfangenen Abfragesignalen. Dabei ist es ferner möglich, dass vor dem Zählen noch eine Auswertung der empfangenen Abfragesignale stattfindet. Die Auswertung kann dabei darin bestehen, dass beispielsweise die identifikationsgeberseitige Sende-/Empfangseinrichtung in den Abfragesignalen enthaltene Informationen analysiert, und insbesondere danach die Abfragesignale klassifiziert. Dies ist vorteilhaft , da die fahrzeugseitige Sende-/Empfangseinrichtung Abfragesignale verschiedener Art bzw. verschiedenen Zwecks aussendet, aber für das folgende Zählen nur empfangene Abfragesignale relevant sind, die einem bestimmten Zweck zuzuordnen sind, wie dem Verlassen des Fahrzeugs bzw. dem Deaktivieren eines im Fahrzeug liegen gebliebenen Identifikationsgebers. Anders ausgedrückt kann beispielsweise nach dem Empfangen eines Abfragesignals eine Filterung vorgenommen werden, so dass nur bestimmte Abfragesignale (gleichen Zwecks) für das Zählen verwendet werden. Es ist ferner denkbar, dass eine Auswertung bezüglich der Signalnummer eines Abfragesignals beispielsweise durch die identifikationsgeberseitige Sende-/Empfangseinrichtung erfolgen kann, um insbesondere festzustellen, welches Abfragesignal der vorbestimmten Anzahl von Abfragesignalen nicht empfangen worden ist.

Es ist nun möglich, dass beispielsweise fünf Abfragesignale über einen definierten Zeitabschnitt im Abstand von einer bis mehreren Sekunden ausgesendet werden, die von dem mobilen Identifikationsgeber, je nachdem ob er sich noch in Reichweite befindet, empfangen oder nicht mehr empfangen werden. Der zumindest eine mobile Identifikationsgeber hat zudem eine identifikationsgeberseitige Steuereinrichtung zum Ausgeben eines unterschiedlichen Steuerbefehls in Abhängigkeit der Anzahl der empfangenen Abfragesignale. Aufgrund der Auswertung bzw. Zählung der empfangenen Abfragesignale ist es für die identifikationsgeberseitige Steuereinrichtung somit möglich, zu beurteilen, ob sich der mobile Identifikationsgeber entfernt vom Fahrzeug befindet (geringe Anzahl von empfangener Abfragesignale), beispielsweise weil ihn der Kraftfahrzeugnutzer beim Entfernen vom Fahrzeug außer Reichweite der fahrzeugseitigen Sende-/Empfangseinrichtung gebracht hat, oder sich noch im Fahrzeug befindet (hohe Anzahl von empfangenen Abfragesignalen), weil er beispielsweise vom Kraftfahrzeugnutzer im Fahrzeug bzw. der Fahrgastzelle vergessen wurde. Entsprechend der Anzahl der empfangenen Abfragesignale kann die identifikationsgeberseitige Steuereinrichtung einen unterschiedlichen Steuerbefehl ausgeben, der zum einen im mobilen Identifikationsgeber selbst ausgeführt wird oder nach Übertragen mittels der identifikationsgeberseitigen Sende-/Empfangseinrichtung zum Fahrzeug dort ausgeführt werden kann. Folglich lassen sich durch die Zählung der empfangenen Abfragesignale und das entsprechende Aussenden eines bestimmten Steuerbefehls erforderliche Sicherheitsmaßnahmen ausführen, um die Sicherheit der Zugangsanordnung zu verbessern.

Es ist möglich, dass zum Auslösen des Aussendens des einen oder der mehreren fahrzeugseitigen Signale bzw. Abfragesignale durch die fahrzeugseitige Sende-/Empfangseinrichtung eine Auslöseeinrichtung vorgesehen ist. Dabei ist die Auslöseeinrichtung ausgelegt, ein auslösendes Ereignis, wie ein Auslösesignal oder einen Auslösezustand zu erfassen, und ansprechend darauf, die fahrzeugseitige Sende-/Empfangseinrichtung zu veranlassen, das eine oder die mehreren Abfragesignale auszusenden.

Die Auslöseeinrichtung kann als auslösendes Ereignis dabei beispielsweise einen Türsensor umfassen, der zum Erfassen eines Schließzustands bzw. eines offenen oder geschlossenen Zustands zumindest einer Tür des Fahrzeugs dient. Als ein Auslösesignal oder ein Auslösezustand (Trigger) kann dabei ein erfasster geschlossener Türzustand von dem Türsensor dienen, so dass ansprechend auf den erfassten geschlossenen Türzustand die fahrzeugseitige Sende-/Empfangseinrichtung zum Aussenden der Abfragesignale veranlasst wird. Es ist ferner denkbar, als Kriterium für das Aussenden des einen oder der mehreren Abfragesignale festzulegen, dass zunächst ein offener und dann ein geschlossener Türzustand festgestellt wird.

Dies kann dann auftreten, wenn ein Fahrzeugnutzer am Zielort die Fahrertür öffnet, um auszusteigen, und diese dann wieder schließt, nach dem er ausgestiegen ist. Als weiteres zusätzliches oder alternatives Kriterium (auslösendes Ereignis) neben dem Erkennen eines geschlossenen bzw. zunächst offenen und dann geschlossenen Zustands für das Aussenden der Mehrzahl von Abfragesignalen kann sein, dass ein Verriegelungszustand der zumindest einen Tür des Fahrzeugs erfasst wird, wobei das eine oder die mehreren Abfragesignale dann auszusenden begonnen werden, wenn ein verriegelter Zustand der zumindest einen Tür erfasst wird. Zum Abfragen des Verriegelungszustands der Tür kann die Auslöseeinrichtung eine Verrieglungseinrichtung umfassen, die der zumindest einen Tür des Fahrzeugs zugeordnet ist. Außerdem kann als weiteres zusätzliches oder alternatives Kriterium neben den genannten Kriterien sein, dass ein Betriebszustand des Motors bzw. der Brennkraftmaschine erfasst wird, wobei das Aussenden des einen oder der mehreren von Abfragesignalen dann begonnen wird, wenn der Motor abgestellt ist bzw. sich in einem deaktivierten Zustand befindet. Zum Erfassen des Betriebszustands des Motors bzw. der Brennkraftmaschine kann die Auslöseeinrichtung ferner einen Motorsensor umfassen.

Es ist jedoch auch möglich, dass die Auslöseeinrichtung die fahrzeugseitige Sende-/Empfangseinrichtung selbst umfasst, die dafür ausgelegt ist, als auslösendes Ereignis ein Verriegelungssignal zum Verriegeln von zumindest einer Tür des Fahrzeugs zu empfangen, wobei die fahrzeugseitige Sende-/Empfangseinrichtung das eine oder die mehreren Abfragesignale ansprechend auf den Empfang des Verriegelungssignals aussendet. Das Verriegelungssignal kann dabei von einer beliebigen Fernsteuerung stammen, die zum Ausgeben von Verriegelungssignalen (vorteilhafterweise auch zum Ausgeben von Entriegelungssignalen) ausgelegt ist. Insbesondere ist es denkbar, dass ein mobiler Identifikationsgeber das Verriegelungssignal (beispielsweise ansprechend auf das Drücken einer Taste durch einen Benutzer) aussendet. Der Vorteil für das Aussenden der Abfragesignale ansprechend auf den Empfang eines Verriegelungssignals hin kann in folgendem Fall bestehen. Die Zugangsanordnung umfasst zumindest einen ersten und einen zweiten mobilen Identifikationsgeber. Während der erste mobilen Identifikationsgeber nach einem Abstellen bzw. Parken des Fahrzeugs von einem Benutzer, der sich vom Fahrzeug wegbewegt, mitgeführt wird, wurde der zweite mobile Identifikationsgeber im Fahrzeug vergessen. Sendet nun der Benutzer bzw. dessen ersten mobiler Identifikationsgeber beispielsweise durch Drücken einer dafür vorgesehenen Taste an dem ersten mobilen Identifikationsgeber ein Verriegelungssignal an das Fahrzeug, so wird eine bzw. werden alle Türen des Fahrzeugs verriegelt und das Fahrzeug beginnt mit dem Aussenden der Abfragesignale. Diese werden vom im Innenraum vergessenen zweiten mobilen Identifikationsgeber empfangen, so dass dieser einen entsprechenden Steuerbefehl ausführen kann, insbesondere eine Deaktivierung (vgl. ausführlicher noch unten), da sich seine Position nicht ändert und er eine große Anzahl von Abfragesignalen empfangen kann. Obwohl das Fahrzeug also "aktiv" verriegelt wird, findet in dem erwähnten Fall zusätzlich noch das Aussenden der Abfragesignale statt, um eine Deaktivierung von im Fahrzeug liegen gebliebenen Identifikationsgebern sicherzustellen.

Gemäß einer vorteilhaften Ausgestaltung ist die identifikationsgeberseitige Steuereinrichtung derart ausgelegt, bei einer Anzahl von empfangenen Abfragesignalen größer oder gleich einer vorbestimmten Mindestanzahl ein Deaktivierungssignal zum Deaktivieren des mobilen Identifikationsgebers, insbesondere der identifikationsgeberseitigen Sende-/Empfangseinrichtung, auszugeben. Das bedeutet, ist die Anzahl der empfangenen Abfragesignale innerhalb eines Abfragesignalzeitintervalls (d.h. einem Zeitintervall, innerhalb dem alle Abfragesignale der vorbestimmten Anzahl von Abfragesignalen ausgesendet werden) so hoch, dass anzunehmen ist, dass der mobile Identifikationsgeber während des Zeitintervalls des Aussendens der Abfragesignale am gleichen Ort verblieben ist, weil er beispielsweise im Fahrzeuginneren vergessen worden ist, so bestimmt die identifikationsgeberseitige Steuereinrichtung eine Deaktivierung des mobilen Identifikationsgebers oder lediglich der identifikationsgeberseitigen Sende-/Empfangseinrichtung, damit der mobile Identifikationsgeber zumindest für eine bestimmte Zeit nicht mehr in der Lage ist, eine Authentifizierung mit der fahrzeugseitigen Sende-/Empfangseinrichtung durchzuführen (um ein eventuelles Entriegeln einer Fahrzeugtür zu ermöglichen). Eine Deaktivierung des mobilen Identifikationsgebers kann beispielsweise durch Unterbrechen der Stromzufuhr von einer Energiequelle des Identifikationsgebers zu dessen elektronischen Komponenten erfolgen. Um nun einen deaktivierten mobilen Identifikationsgeber bzw. dessen deaktivierte Sende-/Empfangseinrichtung wieder zu aktivieren, kann der mobile Identifikationsgeber ein Betätigungselement beispielsweise in Form einer Taste aufweisen, durch deren Betätigung durch einen Benutzer bzw. Kraftfahrzeugnutzer eine Aktivierung des mobilen Identifikationsgebers oder dessen Sende-/Empfangseinrichtung bewirkt wird. Im Gegensatz zu herkömmlichen Zugangssystemen findet also eine Deaktivierung eines mobilen Identifikationsgebers nicht von außen durch ein Sperrsignal einer fahrzeugseitigen Sende-/Empfangseinrichtung statt, sondern durch Analysieren bzw. Zählen der der Anzahl von empfangenen Abfragesignalen zu verschiedenen Zeitpunkten durch den mobilen Identifikationsgeber selbst. Entsprechend kann auch eine erneute Aktivierung wieder direkt am mobilen Identifikationsgeber selbst vorgenommen werden.

Gemäß einer weiteren vorteilhaften Ausgestaltung ist die identifikationsgeberseitige Steuereinrichtung derart ausgelegt, bei einer Anzahl von empfangenen Abfragesignalen kleiner einer vorbestimmten Mindestanzahl ein Verriegelungssignal zum Verriegeln der Tür des Fahrzeugs auszugeben. Das bedeutet, stellt die identifikationsgeberseitige Steuereinrichtung fest, dass die Anzahl der empfangenen Abfragesignale innerhalb des Abfragesignalzeitintervalls gering ist und unterhalb der Mindestanzahl liegt, so kann sie darauf schließen, dass sich der mobile Identifikationsgeber vom Fahrzeug bzw. der fahrzeugseitigen Sende-/Empfangseinrichtung wegbewegt hat (und nicht mehr in Reichweite der fahrzeugseitigen Sende-/Empfangseinrichtung liegt), beispielsweise da er in einer Tasche des Kraftfahrzeugnutzers vorgesehen ist, und sich mit dem Kraftfahrzeugnutzer vom Fahrzeug entfernt. In diesem Fall braucht sich der Kraftfahrzeugnutzer nicht mehr selbst um das Verriegeln seines Fahrzeugs kümmern, sondern dies übernimmt nun der mobile Identifikationsgeber, indem er über die identifikationsgeberseitige Sende-/Empfangseinrichtung das Verriegelungssignal zu der fahrzeugseitigen Sende-/Empfangseinrichtung sendet, welche das Verriegelungssignal (eventuell über eine fahrzeugseitige Steuereinrichtung) einer Verriegelungseinrichtung zum Verriegeln der zumindest einen Tür weitergibt. Die Verriegelungseinrichtung kann dabei ein einzelnes bzw. bestimmtes elektronisch steuerbares Schloss sein oder als Zentralverriegelung des Fahrzeugs ausgeführt sein. Es ist ferner denkbar, dass bei feststellen einer Anzahl von empfangenen Abfragesignalen unterhalb der Mindestanzahl zunächst eine Auswertung bzw. Analyse der Abfragesignale nach ihrem Inhalt, insbesondere der Signalnummer stattfindet, so dass erkannt werden kann, welches der Abfragesignale in der Reihenfolge nicht empfangen worden ist. Werden beispielsweise die ersten Abfragesignale der vorbestimmten Anzahl von Abfragesignalen empfangen, während die letzteren Abfragesignale nicht empfangen werden, so kann auf ein Wegbewegen des mobilen Identifikationsgebers geschlossen werden, aufgrund dessen, wie oben beschrieben, ein Verriegelungssignal ausgesendet werden kann. Wird hingegen festgestellt, dass beispielsweise jedes zweite Abfragesignal nicht empfangen wurde, so kann vielmehr auf eine Störung irgendwo in der Anordnung geschlossen werden, so dass es in diesem Fall eventuell vorteilhaft ist, den mobilen Identifikationsgeber teilweise (z.B. nur die Sendefunktion) oder vollständig zu deaktivieren.

Gemäß einer weiteren Ausgestaltung ist es auch denkbar, dass die identifikationsgeberseitige Steuereinrichtung derart ausgelegt ist, dass sie bei Empfangen von Abfragesignalen (größer oder) gleich einer vorbestimmten zweiten Mindestzahl unmittelbar ein Deaktivierungssignal zum Deaktivieren des mobilen Identifikationsgebers (zumindest der Sendefunktion) ausgibt. Die vorbestimmte zweite Mindestzahl kann dabei kleiner als die vorbestimmten Mindestzahl sein und beispielsweise den Wert eins oder zwei haben. Der Sinn der Definition dieser zweiten vorbestimmten Mindestzahl liegt darin, dass im Fall der oben erwähnten Ausgestaltungen eine Entscheidung bzgl. des Ausgebens eines Steuerbefehls erst getroffen wird, wenn das Abfragesignalzeitintervall abgelaufen ist bzw. wenn alle Abfragesignale der vorbestimmten Anzahl von Abfragesignalen fahrzeugseitig ausgesendet worden sind. Für den Fall jedoch, dass ein mobiler Identifikationsgeber jedoch im Fahrzeug vergessen wurde, stellt er ein Sicherheitsrisiko dar, das so schnell wie möglich beseitigt werden soll. Somit ist es gemäß dieser Ausgestaltung möglich, nicht bis zum Ablauf des Abfragesignalzeitintervalls zu warten, sondern unmittelbar nach Empfangen einer Anzahl von Abfragesignalen (größer oder) gleich einer vorbestimmten zweiten Mindestzahl ein "vorläufiges" Deaktivierungssignal auszugeben, durch das die identifikationsgeberseitige Sende-/Empfangseinrichtung zumindest daran gehindert wird, Signale (wie für ein passives Zugangsverfahren) auszusenden. Nach Ablauf des Abfragesignalzeitintervalls wird schließlich die Gesamtzahl der empfangenen Abfragesignale betrachtet, und es kann ein abschließender Steuerbefehl ausgegeben werden, wie es bzgl. obiger Ausgestaltungen beschrieben ist. Das bedeutet, es kann die Deaktivierung des Identifikationsgebers beibehalten bleiben bzw. eine Deaktivierung weiterer Komponenten des Identifikationsgebers erfolgen, oder es kann wieder eine Aktivierung des Identifikationsgebers erfolgen, wenn sich dieser (mit dem Benutzer) vom Fahrzeug wegbewegt hat, und somit weniger Abfragesignale als die vorbestimmte Mindestanzahl empfangen hat.

Gemäß einer weiteren Ausgestaltung erfolgt das Aussenden der Abfragesignale derart, dass die einzelnen Abfragesignale der vorbestimmten Anzahl von Abfragesignalen in bestimmten oder auch periodisch sich wiederholenden Zeitintervallen ausgesendet werden. Derartige Zeitintervalle können von einer bis mehreren Sekunden, insbesondere 5 Sekunden (s) betragen, um ein Bewegen bzw. Wegbewegen des mobilen Identifikationsgebers zu erfassen. Das Aussenden aller Abfragesignale erfolgt innerhalb eines Abfragezeitintervalls. Wie bereits erwähnt, erfolgt das Aussenden der Abfragesignale nach einem oder mehreren vorbestimmten Kriterien. Es kann auch wieder nach einem oder mehreren vorbestimmten Kriterien beendet werden. Dabei kann das Empfangen eines Verriegelungssignals von dem mobilen Identifikationsgeber ein Kriterium zum Beenden des Aussendens der Abfragesignale sein. Der Vollständigkeit halber sei noch der Fall erwähnt, bei dem beispielsweise nach Verlassen des Fahrzeugs seitens des Kraftfahrzeugnutzers und schließen der zumindest einen Fahrzeugtür sowohl im Fahrzeuginneren ein mobiler Identifikationsgeber liegen geblieben ist und ein weiterer mobiler Identifikationsgeber sich mit dem Kraftfahrzeugnutzer vom Fahrzeug wegbewegt. Ausgehend von einem mobilen Identifikationsgeber, der auch in der Lage ist, aktiv durch eine Betätigung seitens des Kraftfahrzeugnutzers ein Verriegelungssignal abzusenden (wie bei einem nachgerüsteten passiven Zugangssystem), so ist es dabei möglich, dass das aktiv ausgesendete Verriegelungssignal beispielsweise von der fahrzeugseitigen Sende-/Empfangseinrichtung empfangen wird, noch bevor die vorbestimmte Anzahl von Abfragesignalen ausgesendet wurden. In diesem Fall wird die fahrzeugseitige Sende-/Empfangseinrichtung vorteilhafter Weise trotz Empfang des Verriegelungssignals die vorbestimmte Anzahl von Abfragesignalen aussenden, damit auch ein im Fahrzeuginneren liegen gebliebener mobiler Identifikationsgeber die Möglichkeit hat, eine ordnungsgemäße Zählung der Abfragesignale durchzuführen und sich gegebenenfalls zu deaktivieren.

Gemäß einem weiteren Aspekt der Erfindung wird ein Verfahren zum Betreiben einer Zugangsanordnung für ein Fahrzeug geschaffen, das folgende Schritte aufweist. Es wird eine vorbestimmte Anzahl von Abfragesignalen seitens des Fahrzeugs ausgesendet. Dieses Aussenden der Abfragesignale kann durch Erfassen eines auslösenden Ereignisses, wie eines Auslösesignals bzw. eines Auslösezustands getriggert bzw. veranlasst werden. Beispielsweise kann das Erfassen des Schließzustands zumindest einer Tür des Fahrzeugs das Aussenden der Abfragesignale bewirken. Schließlich werden von einem mobilen Identifikationsgeber die ausgesendeten Abfragesignale empfangen und gezählt. Anschließend wird ein entsprechender unterschiedlicher Steuerbefehl von dem mobilen Identifikationsgeber in Abhängigkeit der Anzahl von empfangenen Abfragesignalen ausgegeben. Aufgrund der Auswertung bzw. Zählung der empfangenen Abfragesignale ist somit der mobile Identifikationsgeber in der Lage, selbst festzustellen, ob er sich beispielsweise mit einem Kraftfahrzeugnutzer vom Fahrzeug wegbewegt hat oder sich noch im Fahrzeug befindet und dort liegen gelassen wurde. Entsprechend kann er sicherheitsrelevante Maßnahmen durch Aussenden von unterschiedlichen Steuerbefehlen einleiten.

Vorteilhafte Ausgestaltungen der oben dargestellten Anordnung sind, soweit im Übrigen auf das Verfahren übertragbar, auch als vorteilhafte Ausgestaltung des Verfahrens anzusehen.

Im Folgenden sollen nun beispielhafte Ausführungsformen der vorliegenden Erfindung bezugnehmend auf die beiliegenden Zeichnungen näher erläutert werden. Es zeigen:
- Figur 1: ein Blockschaltbild eines schlüssellosen elektronischen Zugangsberechtigungssystems bzw. einer Zugangsanordnung gemäß einer Ausführungsform der Erfindung;
- Figur 2: eine schematische Darstellung eines Szenarios, bei dem ein Kraftfahrzeugnutzer das Fahrzeug verlässt, wobei zum einen ein mobiler Identifikationsgeber im Fahrzeuginneren zurückgelassen wurde oder zum anderen mit dem Fahrer mitgeführt wird;
- Figur 3: ein Ablaufschema der einzelnen Vorgänge die sowohl im Fahrzeug als auch in einem zugeordneten Identifikationsgeber durchgeführt werden, wenn der Kraftfahrzeugnutzer sein Fahrzeug verlässt.

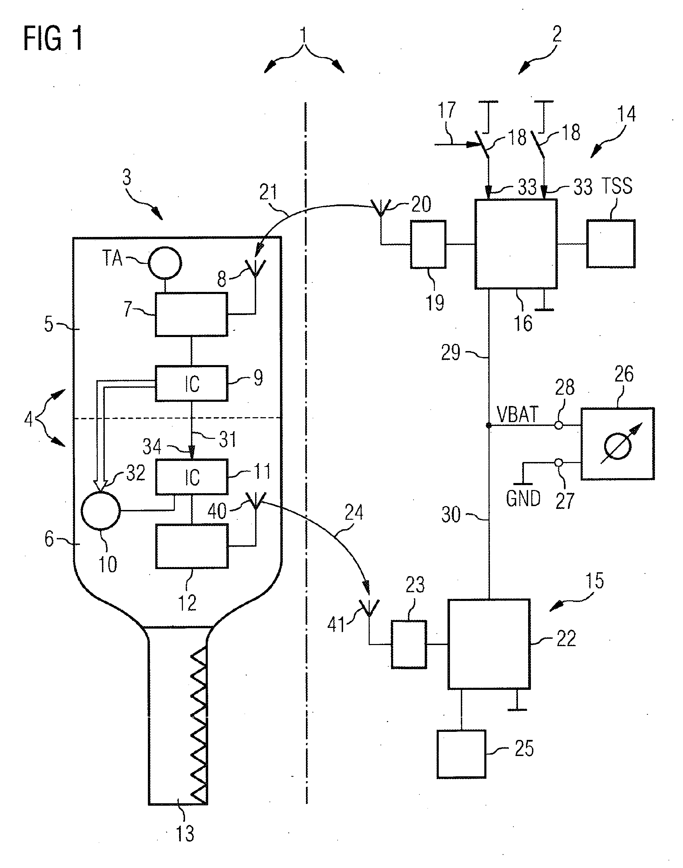

Es sei zunächst auf Figur 1 verwiesen, in der ein Zugangsberechtigungssystem bzw. eine Zugangsanordnung 1, welche hier für die Anwendung in einem Kraftfahrzeug ausgelegt ist, dargestellt ist. Das Zugangsberechtigungssystem 1 umfasst einen fahrzeugseitigen, stationären Bereich 2 sowie einen schlüsselseitigen, mobilen Bereich 3.

In dem mobilen Bereich 3 ist ein mobiler Identifikationsgeber in der Form eines elektronischen Schlüssels 4 vorgesehen. Der elektronische Schlüssel 4 umfasst zwei Schlüsselbereiche 5 und 6. Der erste Schlüsselbereich 5 enthält dabei eine nicht detailliert dargestellte Transponder, und ist für ein passives Zugangssystem, wie zum Beispiel ein PASE-System, ausgebildet. Ferner umfasst der erste Schlüsselbereich 5 eine Empfangseinrichtung 7, welche eine induktive Antenne bzw. Empfangsantenne 8 aufweist, sowie eine mit der Empfangseinrichtung 7 verbundene Steuer- und Auswerteschaltung 9. Der zweite Schlüsselbereich 6 enthält eine Fernbedienungsfunktion (RKE-Remote Keyless Entry) zum ferngesteuerten Ent- und Verriegeln von einem oder mehreren Türschlössern. Typischerweise, jedoch nicht notwendiger Weise, wird die Fernbedienung bei Frequenzen in einem Bereich von etwa 447 MHz betrieben. Die Fernbedienung kann mehrere Schalterstellungen aufweisen, um beispielsweise zu unterscheiden, ob lediglich die Fahrertür, alle Türen, die Kofferraumtür, etc. geöffnet werden sollen, oder ob diese Türen geschlossen bzw. verriegelt werden sollen.

Die Fernbedienung umfasst zumindest eine in Figur 1 nicht dargestellte Fernbedienungstaste, die in bekannter Weise mit einem entsprechenden Aufnehmer 10, beispielsweise einem kapazitiven Aufnehmer, einem Druckaufnehmer oder dergleichen, gekoppelt ist. Der Aufnehmer 10 ist seinerseits über eine Verbindungsleitung mit einer Steuer- und Auswerteeinrichtung 11 gekoppelt, die mit einer Sendeeinrichtung 12 verbunden ist. Die Auswerte- und Steuerschaltungen 9, 11 in dem Schlüssel 4 können beispielsweise als programmierbare Logikschaltungen, beispielsweise als PLD oder als FPGA-Schaltungen oder auch als einfache Mikroprozessoren ausgebildet sein.

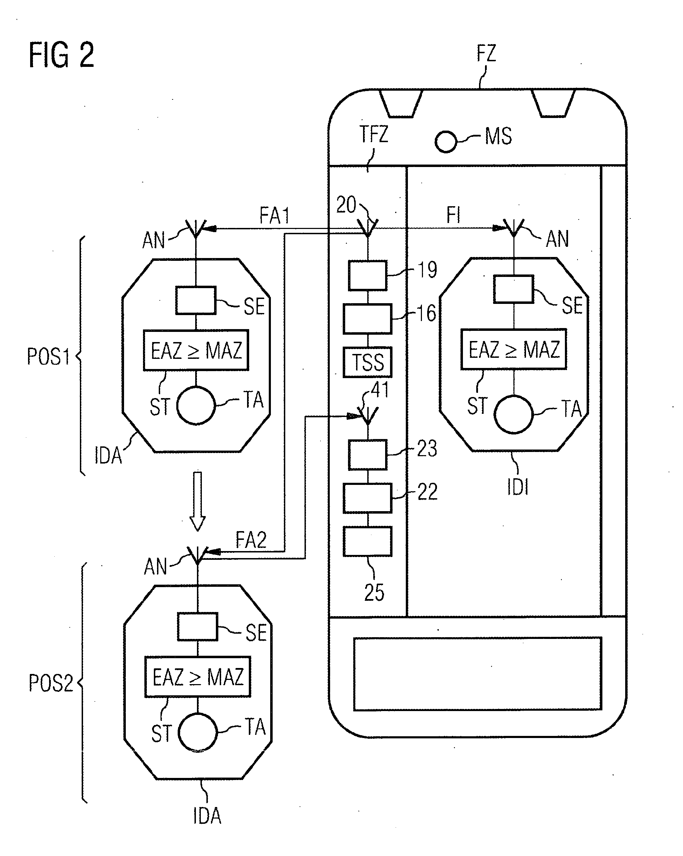

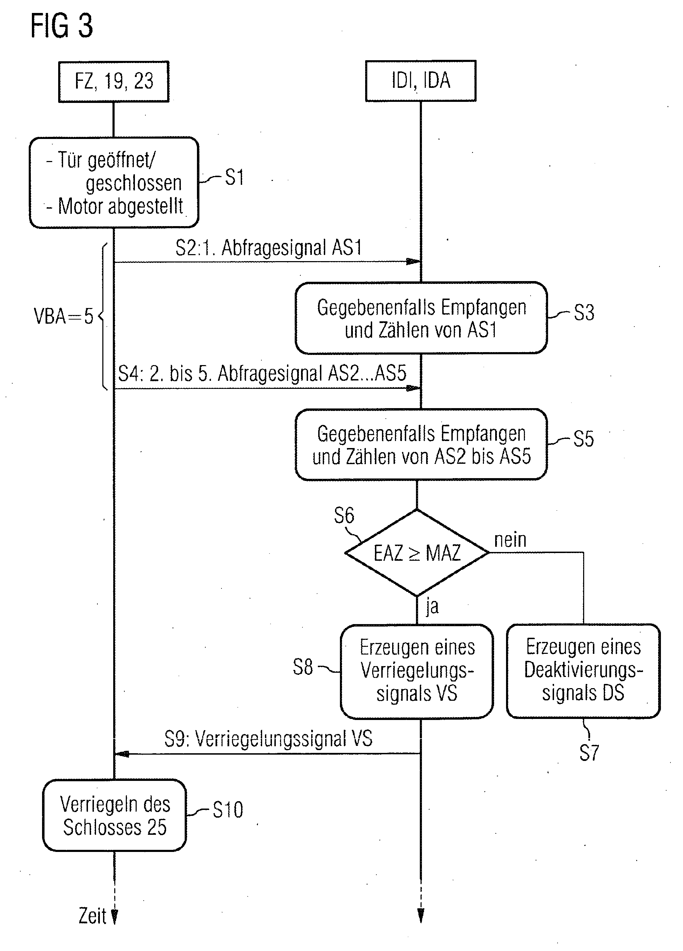

Zusätzlich weist der elektronische Schlüssel 4 auch einen mechanischen Schlüsselbereich 13 auf, der zum mechanischen Öffnen eines Türschlosses mit einem Schlüsselkamm oder Schlüsselbart 13 ausgestattet ist. Außerdem ist eine Taste TA vorgesehen, deren Funktion unten bezüglich der Figuren 2 bzw. 3 erläutert werden wird.

Der fahrzeugseitige, stationäre Bereich 2 umfasst ein passives elektronisches Zugangsberechtigungssystem 14 (oder kurz passives Zugangssystem) sowie ein aktives elektronisches Zugangsberechtigungssystem 15 (oder kurz aktives Zugangssystem). Das passive Zugangssystem 14, hier in der Form eines nachgerüsteten Systems, kann dabei in einer Tür des Fahrzeugs vorgesehen sein (siehe auch Figur 2) und weist ein Steuergerät 16 auf. Das Steuergerät 16 ist zur Aufnahme von passiven Zugangsberechtigungsanfragen 17 mit eigens dafür vorgesehenen Schaltern oder Sensoren 18 verbunden. Diese Schalter 18 können zum Beispiel in einem Türgriff angeordnet sein. Als Sensor eignet sich vorzugsweise ein kapazitiver Sensor oder auch ein optischer Sensor, beispielsweise eine Lichtschranke. Das Steuergerät 16 ist ferner mit einer Sendeeinrichtung 19 verbunden, die seinerseits mit zumindest einer induktiven Antenne bzw. Sendeantenne 20 verbunden ist. Die Reichweite der induktiven Antenne 20 ist für die Überprüfung einer Zugangsberechtigung typischerweise auf etwa 1-2 m um die Fahrzeugtür eingeschränkt, sie kann jedoch für Szenarios, bei denen der Kraftfahrzeugnutzer das Fahrzeug verlässt (vergleiche Beschreibung zu Figuren 2 und 3), auch eine größere Reichweite von mehreren Metern aufweisen. Mittels der fahrzeugseitigen und schlüsselseitigen Sendeeinrichtung 19 bzw. Empfangseinrichtung 7 lässt sich bei Anwendung des passiven Zugangssystems 14 eine vorzugsweise undirektionale Datenkommunikation zwischen der fahrzeugseitigen Basisstation und dem Transponder im ersten Schlüsselbereich aufbauen, wobei die entsprechende Kommunikationsstrecke zwischen den entsprechenden Antennen 8, 20 in Figur 1 mit Bezugszeichen 21 bezeichnet ist. Diese Datenkommunikation 21 erfolgt vorzugsweise mittels hochfrequenter elektromagnetischer Wellen, die zur Verbesserung der Datensicherheit vorzugsweise - jedoch nicht notwendiger Weise - kryptologisch oder mittels eines Festcodes abgesichert ist. Im Falle einer kryptologisch oder mittels eines Festcodes abgesicherten Datenkommunikation erfolgt diese vorzugsweise bidirektional, wobei in diesem Fall jeweils die Antennen 8, 20 als Sende-/Empfangsantennen, die entsprechenden Elemente 7, 19 als Sende-/Empfangseinrichtungen (Transceiver) ausgebildet sein müssen.

Das aktive Zugangssystem 15 umfasst ein Steuergerät 22, beispielsweise das Steuergerät 22 einer Zentralverriegelung, welches über die Funkfernbedienung ansteuerbar ist. Zu diesem Zwecke ist das Steuergerät 22 mit einem Empfänger 23 verbunden. Über einen Sender 12 sowie eine Antenne 40 im zweiten Schlüsselbereich 6 und einem Empfänger 23 sowie einer Antenne 41 im aktiven Zugangssystem 15 ist eine mit Bezugszeichen 24 bezeichnete Kommunikationsverbindung ausbildbar. Das Steuergerät 22 ist mit zumindest einem Schloss 25, beispielsweise einem Türschloss einer Tankklappe, einem Kofferraumdeckel oder dergleichen, verbunden.

Ferner ist eine Versorgungsspannungsquelle 26 vorgesehen. Die Versorgungsspannungsquelle 26 ist im Fall eines Kraftfahrzeugs als Autobatterie, welche ausgangsseitig eine Gleichspannung liefert, ausgebildet. Die Versorgungsspannungsquelle 26 weist zwei Versorgungsausgänge 27, 28 auf. Der erste Versorgungsausgang 27 weist das Potential GND der Bezugsmasse auf. Der zweite Versorgungsanschluss 28 liefert ein Batteriepotential VBAT. Das erste Steuergerät 16 und das zweite Steuergerät 22 sind jeweils über Versorgungsleitungen 29, 30 mit einem zweiten Versorgungsanschluss 28 verbunden, so dass diesen jeweils das Batteriepotential VBAT zugeführt wird. Darüber hinaus sind die beiden Steuergeräte 16, 22 auch mit dem Potential GND der Bezugsmasse verbunden.

Die Steuer- und Auswerteschaltung 9 im ersten Schlüsselbereich 5 ist mit der entsprechenden Steuer- und Auswerteschaltung 11 im zweiten Schlüsselbereich über eine elektrische Verbindungsleitung 31 verbunden. Zusätzlich oder alternativ kann auch vorgesehen sein, dass die Steuer- und Auswerteschaltung 9 über eine mechanische Betätigungseinrichtung mit dem entsprechenden Aufnehmer 10 im zweiten Schlüsselbereich 6 gekoppelt ist. Auf diese Weise lässt sich gesteuert durch die Steuer- und Auswerteschaltung 9 ein mechanischer Druck auf den Aufnehmer 10 simulieren, was in Figur 1 mit der Verbindung 32 angedeutet ist.

Wie bereits kurz angedeutet, ist in dem Zugangsberechtigungssystem 1 der erste Schlüsselbereich 5, wie auch das passive Zugangssystem 14 nachgerüstet worden. Das bedeutet, dass das ursprüngliche Zugangsberechtigungssystem 1 lediglich einen den zweiten Schlüsselbereich 6 aufweisenden elektronischen Schlüssel 4 sowie das aktive Zugangssystem 15 enthalten hat. Durch Ankoppelung des passiven Zugangssystem 14 an die Batterie 26 sowie durch Ankoppelung des ersten Schlüsselbereichs 5 an den elektronischen Schlüssel 4 kann auf sehr einfache und elegante Weise ein Nachrüsten des Zugangsberechtigungssystem erfolgen.

Nachfolgend sei die Funktionsweise des (nachgerüsteten) Zugangsberechtigungssystems 1 entsprechend der Figur 1 für den fall beschrieben, dass ein Benutzer oder Kraftfahrzeugnutzer Zugang zu seinem Fahrzeug erlangen möchte. Dabei sei zunächst lediglich der Fall betrachtet, dass eine passive Zugangsberechtigungsanfrage vorgenommen wird.

Im Fall einer passiven Zugangsberechtigungsanfrage, beispielsweise bei einer Annäherung des Kraftfahrzeugnutzers an das Kraftfahrzeug, wird zumindest einer der Schalter 18 betätigt oder ein entsprechender Sensor 18 spricht an. Dieser Schalter 18 bzw. der Sensor 18 erzeugt ein Sensorsignal 33, welches von dem Steuergerät 16 ausgewertet wird. Bei einer positiven Auswertung des Sensorsignals 33 erfolgt eine erste Datenkommunikation 21. Dabei werden zwischen dem passiven Zugangssystem 14 und dem Transponder im ersten Schlüsselbereich 5 kryptologische Daten ausgetauscht, um festzustellen, ob eine berechtigte Zugangsberechtigungsanfrage 17 vorliegt. Eine berechtigte passive Zugangsberechtigungsanfrage 17 liegt dann vor, wenn ein mit dem richtigen Schlüssel ausgestatteter Kraftfahrzeugnutzer sich diesem nähert. Dies wird in der Steuer- und Auswerteschaltung 9 im Transponder sowie im Steuergerät 16 festgestellt. Bei einer positiven Auswertung einer berechtigten Zugangsberechtigungsanfrage 17 erzeugt die Steuer- und Auswerteschaltung 9 ein Steuersignal 34, welches der Steuer- und Auswerteschaltung 11 im zweiten Schlüsselbereich 6 zugeführt wird. Dieses Steuersignal 34 simuliert eine aktive Zugangsberechtigungsanfrage, entsprechend einem Signal von dem Aufnehmer 10 nach dessen Betätigung. Über den Sender 12 bzw. die Antenne 40 wird sodann ein Zugangssteuersignal mittels der zweiten Datenkommunikation 24 an die Empfangseinrichtung 23 des aktiven Zugangsberechtigungssystem 15 gesendet. Das zweite Steuergerät 22 wertet dies nun als aktive Zugangsberechtigungsanfrage, obgleich es sich hier um eine passive Zugangsberechtigungsanfrage gehandelt hat. Das Steuergerät 22 steuert nun das Schloss (oder auch die Schlösser einer Zentralverriegelung) entsprechend an, wodurch dieses Schloss 25 entriegelt (oder, wie es unten noch beschrieben werden wird, verriegelt) wird. Der fahrzeugseitige End- bzw. Verriegelungsvorgang unterscheidet sich somit nicht von dem bisherigen ferngesteuerten Entriegelungsvorgang bei manueller Betätigung der Fernbedienungstaste im Schlüssel 4.

Das dargestellte Zugangsberechtigungssystem 1 funktioniert selbstverständlich auch dann, wenn der Benutzer die Fernbedienung an dem elektronischen Schlüssel betätigt, also eine tatsächliche aktive Zugangsberechtigungsanfrage vorliegt. In diesem Fall erfolgt eine direkte Datenkommunikation 24 zu dem aktiven Zugangssystem 15 lediglich unter Verwendung der Elemente des zweiten Schlüsselbereichs 6. Darüber hinaus lässt sich das Schloss 25 auch lediglich über den Schlüsselbart 13 ent- und/oder verriegeln.

Nachdem nun in Bezug auf Figur 1 der Fall erläutert wurde, bei dem ein Kraftfahrzeugnutzer Zugang zu seinem Fahrzeug sucht, soll nun bezugnehmend auf Figur 2 bzw. 3 der Fall betrachtet werden, bei dem ein Kraftfahrzeugnutzer beispielsweise nach Abstellen bzw. Parken seines Fahrzeugs, dieses verlassen möchte. Dazu ist in Figur 2 eine Draufsicht auf ein Fahrzeug FZ dargestellt, das eine Fahrzeugtür TFZ (hier zur Veranschaulichung nicht maßstabsgetreu, sondern etwas vergrößert dargestellt) aufweist, in der einige Komponenten des fahrzeugseitigen, stationären Bereichs 2 von Figur 1 untergebracht sind. Es ist hier jedoch auch möglich, dass die Komponenten (41, 22, 23) des aktiven Zugangssystems an einer anderen Stelle des Fahrzeugs FZ vorgesehen sind. Obwohl der bzw. die Schalter 18 ebenso in der Fahrzeugtür vorgesehen sein können, sind sie in der Darstellung von Figur 2 nicht gezeigt, da sie für die folgende Beschreibung nicht benötigt werden.

Figur 2 stellt neben dem Fahrzeug FZ einen mobilen Identifikationsgeber bzw. elektronischen Schlüssel dar, wobei sich ein elektronischer Schlüssel IDI im Inneren des Fahrzeugs, beispielsweise in der Fahrgastzelle befindet und ein weiterer elektronischer Schlüssel IDA sich außerhalb des Fahrzeugs FZ befindet, wobei angedeutet wird, dass sich der außenbefindliche elektronische Schlüssel IDA von einer ersten Position POS1 zu einer zweiten Position POS2 bewegt. Die jeweiligen elektronischen Schlüssel IDI und IDA besitzen beide den gleichen Aufbau (entsprechend dem Schlüssel 4), wobei aus Gründen der übersichtlichen Darstellung nur die wichtigsten Komponenten schematisiert dargestellt sind. Dabei hat ein elektronischer Schlüssel IDI bzw. IDA eine Antenne AN (beispielsweise stellvertretend für die Antennen 8, 40 des Schlüssels 4), eine Sende-/Empfangseinrichtung SE (zusammengefasst bzw. stellvertretend für die Empfangseinrichtung 7 und die Sendeeinrichtung 12 des Schlüssels 4) sowie eine (identifikationsgeberseitige) Steuereinrichtung ST (zusammengefasst oder stellvertretend für die Steuer- und Auswerteschaltungen 9, 11 des Schlüssels 4). Es sei bemerkt, dass die Antenne AN eine dreidimensionale Struktur haben kann, damit auch Änderungen bezüglich der Feldrichtung von empfangenen Abfragesignalen feststellbar sind. Außerdem besitzt ein elektronischer Schlüssel IDI bzw. IDA eine Taste TA, die durch einen Kraftfahrzeugnutzer betätigbar ist und mit der Steuereinrichtung ST in Verbindung steht. Die Bedeutung dieser Taste TA wird unten näher erläutert werden.

Es soll nun der Fall betrachtet werden, dass ein Kraftfahrzeugnutzer nach Abstellen seines Fahrzeugs FZ das Fahrzeug verlassen möchte, wobei sich einerseits ein elektronischer Schlüssel IDI noch im Fahrzeuginneren befindet, während ein weiterer elektronischer Schlüssel IDA mit dem Kraftfahrzeugnutzer mitgeführt wird und sich bezüglich des Fahrzeugs bewegt bzw. vom Fahrzeug FZ wegbewegt. Der elektronische Schlüssel IDI kann beispielsweise von einem Beifahrer, der ebenso im Besitz eines elektronischen Schlüssels für das Zugangsberechtigungssystem des Fahrzeugs FZ ist, versehentlich auf einen Sitz liegen gelassen sein. Ein möglicher Ablauf beim Verlassen des Fahrzeugs des Kraftfahrzeugnutzers ist dabei gemäß einer beispielhaften Ausführungsform in Figur 3 gezeigt.

Wenn ein Kraftfahrzeugnutzer sein Fahrzeug FZ verlassen möchte, wird er zunächst eine Türe TFZ seines Fahrzeuges FZ öffnen, aus dem Fahrzeug steigen und die Tür TFZ wieder schließen. Somit kann in Schritt S1 als erstes Kriterium (bzw. als auslösendes Ereignis) für das Einleiten weiterer Schritte das Erkennen eines geschlossenen Türzustands sein. Es ist auch denkbar, dass das Erkennen zunächst eines offenen Türzustands und dann eines geschlossenen Türzustands ein Kriterium sein kann. Ein jeweiliger Türzustand kann dabei von einem Türschließsensor TSS erkannt werden, der mit dem Steuergerät 16 verbunden ist. Es ist ferner möglich als weiteres Kriterium für das Einleiten folgender Verfahrensschritte zu überprüfen, ob der Motor bzw. die Brennkraftmaschine des Fahrzeugs abgestellt ist, was als Indiz für ein Abstellen bzw. Parken des Fahrzeugs gewertet werden kann. Dazu hat das Fahrzeug einen Motorsensor MS, der (obwohl es nicht dargestellt ist) ebenso mit dem Steuergerät 16 verbunden ist.

Wurde von dem Steuergerät 16 über die jeweiligen Sensoren TSS ein geschlossener Türzustand bzw. ein offener und dann geschlossener Türzustand und von dem Sensor MS ein abgestellter Motorzustand erkannt (ein auslösendes Ereignis kann dabei also das vorliegen von einem oder mehreren Kriterien umfassen), so beginnt nun das Steuergerät 16 eine vorbestimmte Anzahl VBA (hier im Beispiel fünf) von Abfragesignalen bzw. Anfragesignalen von der Sendeeinrichtung 19 über die Antenne 20 aussenden zu lassen. Die Anfragesignale werden dabei in einem zeitlichen Abstand von mehreren Sekunden, beispielsweise 5s ausgesendet. Es ist möglich, dass die Abfragesignale bestimmte Informationen umfassen, wie beispielsweise die Art bzw. den Zweck und/oder eine Signalnummer. Insbesondere können hier die Abfragesignale als Zweckangabe das Signalisieren des Verlassens des Fahrzeugs seitens des Benutzers aufweisen. Obwohl in Figur 3 lediglich fünf Abfragesignale AS1 bis AS5 dargestellt sind, die von der Sendeeinrichtung 19 ausgesendet werden, ist es auch denkbar, mehr oder weniger als diese fünf Abfragesignale auszusenden.

Es sei nun wieder auf Figur 3 verwiesen, in der entsprechend dem zeitlichen Ablauf in Schritt S2 das erste Abfragesignal AS1 ausgesendet wird, welches dann in Schritt S3 von den elektronischen Schlüsseln IDI und IDA je nach Standort bzgl. des Fahrzeugs bzw. der Sendeeinrichtung 19 empfangen und gezählt wird. Hierbei wird zunächst eine Zählvariable EAZ für die Anzahl empfangener Abfragesignale auf Null gesetzt und dann bei Empfang des Abfragesignals AS1 um den Wert 1 erhöht. Entsprechend werden auch das zweite bis fünfte Abfragesignal AS2 bis AS5, die in Schritt S4 von dem Fahrzeug bzw. der Sendeeinrichtung 19 ausgesandt wurden, gegebenenfalls je nach Standort von den elektronischen Schlüsseln IDI, IDA in Schritt S5 empfangen und gezählt. Dabei ist es möglich, dass nach dem Empfangen die Abfragesignale ferner ausgewertet werden bzw. in den Abfragesignalen enthaltene Informationen analysiert werden. Beispielsweise kann die Zweckangabe der Abfragesignale analysiert werden, wobei dann lediglich die Abfragesignale an den Zählvorgang weitergegeben werden, deren Zweckangabe das Signalisieren des Verlassens des Fahrzeugs seitens des Benutzers ist. Hat sich der Schlüssel IDA während des Aussendens der Abfragesignale von dem Fahrzeug bzw. der Sendeeinrichtung 19 wegbewegt, so wird er nicht mehr alle Abfragesignale empfangen.

Wurden also eventuell Abfragesignale empfangen und gezählt, so findet nun in Schritt S6 in der jeweiligen Steuereinrichtung ST ein Vergleich bezüglich der Anzahl EAZ der empfangenen Abfragesignale mit einer vorbestimmten Mindestanzahl MAZ statt.. Geht man nun von dem einen Fall aus, dass ein elektronischer Schlüssel, wie der Schlüssel IDI, im Fahrzeuginneren vergessen wurde, während sich der Kraftfahrzeugnutzer vom Fahrzeug wegbewegt, so werden im Normalfall alle Abfragesignale AS1 bis AS5 von dem innen liegenden elektronischen Schlüssel IDI empfangen und gezählt werden. Für einen im Fahrzeug im Wesentlichen unbeweglichen elektronischen Schlüssel IDI wird daher die Anzahl EAZ der empfangenen Abfragesignale während eines Abfragesignalzeitintervalls (d.h. einem Zeitintervall, innerhalb dem alle Abfragesignale der vorbestimmten Anzahl von Abfragesignalen ausgesendet werden) oberhalb oder gleich der Mindestanzahl MAZ (im Beispiel vier) liegen, so dass hier in den dargestellten "nein"-Zweig verzweigt wird. Anders ausgedrückt wird die Steuereinrichtung ST für den innen befindlichen elektronischen Schlüssel IDI feststellen, dass eine große Anzahl von Abfragesignalen empfangen worden sind, was bedeutet, dass keine Bewegung des Schlüssels IDI stattgefunden hat, da sich der Schlüssel hier im Inneren des Fahrzeugs vergessen wurde. Da ein derartiger im Fahrzeuginneren befindlicher Schlüssel eine Sicherheitslücke für einen oben dargestellten Zugangsberechtigungsvorgang darstellt, wird nun die Steuereinrichtung ST des Schlüssels IDI in Schritt S7 den Schlüssel IDI deaktivieren bzw. sperren. Dabei kann entweder nur die Sende-/Empfangseinrichtung SE des Schlüssels IDI für eine bestimmte Zeit oder ständig gesperrt werden, um beispielsweise keinen Authentifizierungsvorgang mehr durchführen zu können oder kann der gesamte Schlüssel IDI gesperrt bzw. deaktiviert werden, indem beispielsweise die Energiezufuhr von einer nicht dargestellten Energiequelle des Schlüssels mittels eines Schalters unterbrochen wird.

Auf diese Weise kann durch Empfangen und Zählen der Abfragesignale des Fahrzeugs von dem innen liegenden Schlüssel selbst festgestellt werden, dass er sich im Innenraum befindet und sich zur Verringerung eines Sicherheitsrisikos selbst zu deaktivieren hat. Mittels der oben beschriebenen Taste TA kann ein Kraftfahrzeugnutzer dann den teilweise oder vollständig gesperrten bzw. deaktivierten Schlüssel wieder aktivieren, in dem er die Taste lediglich einfach oder nach einem bestimmten "Aktivierungsmuster" betätigt.

Es soll nun der Fall diskutiert werden, bei dem der elektronische Schlüssel IDA mit dem Kraftfahrzeugnutzer (beispielsweise in dessen Hosentasche oder Handtasche befindlich) mitgeführt wird, während der Kraftfahrzeugnutzer aus dem Fahrzeug FZ steigt und nach Schließen der Tür sich von dem Fahrzeug FZ entfernt.

Hat der Kraftfahrzeugnutzer nach dem Aussteigen aus dem Fahrzeug FZ die Tür TFZ geschlossen, so wird, wie bereits erwähnt, das Aussenden der vorbestimmten Anzahl VBA von Abfragesignale von der Sendeeinrichtung 19 gestartet. Dabei wird sich in einer ersten Position POS1 der außenbefindliche elektronische Schlüssel IDA mit einer geringen Entfernung FA1 von der Antenne 20 befinden, die beispielsweise auch der Entfernung FI des innenbefindlichen elektronischen Schlüssels IDI entsprechen kann. Jedoch bewegt sich der außenbefindliche elektronische Schlüssel IDA nun mit dem Kraftfahrzeugnutzer vom Fahrzeug FZ weg, so dass der Abstand FA2 zur Antenne 20 sich nun beispielsweise bei der Position POS2 vergrößert. Somit werden bei einer festgelegten geringen Reichweite der Abfragesignale hier im Beispiel die ausgesendeten Abfragesignale an der Position POS2 nicht mehr von dem Schlüssel IDA empfangen. Folglich wird die Steuereinrichtung ST des außenbefindlichen elektronischen Schlüssels IDA an der Position POS2 feststellen (vergleiche Schritt S6), dass keine Abfragesignale mehr empfangen werden bzw. wird nach Ablauf des bestimmten Abfragesignalzeitintervalls feststellen, dass die Anzahl EAZ kleiner als die Mindestanzahl ist. Aufgrund dieser Feststellung wird nun die Steuereinrichtung ST in Schritt S8 den Schlüssel IDA nicht deaktivieren, sondern kann gemäß einer vorteilhaften Ausgestaltung beispielsweise an der Position POS2 ein Verriegelungssignal VS erzeugen und dieses in Schritt S9 über die Sende-/Empfangseinheit SE und die Antenne AN zur Antenne 41 des aktiven Zugangssystems (15, vergleiche Figur 1) senden. Hier wird das Verriegelungssignal von dem Empfänger 23 empfangen, von dem Steuergerät 22 ausgewertet und schließlich an das Schloss 25 bzw. eine durch das Schloss 25 repräsentierte Zentralverriegelung weitergeleitet. Das Schloss 25 bzw. die Zentralverriegelung verriegelt dann in Schritt S10 das bzw. die zugeordneten Türschlösser. Somit kann auch bei dem gemäß den Figuren 1 und 2 nachgerüsteten passiven Zugangsberechtigungssystem ein hoher Sicherheitsstandard erreicht werden, in dem der elektronische Schlüssel automatisch, wenn er ein Bewegen bzw. Wegbewegen von dem Fahrzeug erkennt, das Fahrzeug verriegelt.

Es sei noch angemerkt, dass es möglich ist, dass auch der gerade beschriebene elektronische Schlüssel IDA im Außenbereich des Fahrzeugs sich nicht oder nur kaum mit der Zeit bewegt, so dass eine Anzahl EAZ (während des Abfragesignalzeitintervalls) empfangener Abfragesignale größer oder gleich der Mindestanzahl MAZ ist. In diesem Fall wird sich auch der im Außenbereich befindliche elektronische Schlüssel deaktivieren. Eine derartige Deaktivierung kann jedoch wieder durch Drücken der oben erwähnten Taste TA aufgehoben werden. Gemäß einer vorteilhaften Ausgestaltung ist es ferner möglich, dass der deaktivierte elektronische Schlüssel wieder aktiviert wird, wenn er dazu verwendet wird (entsprechend einer Fernbedienung einer aktiven Zugangsanordnung), beispielsweise durch Drücken einer bestimmten Taste des Schlüssels (vgl. dazu entsprechend die mit dem Aufnehmer 10 verbundene Fernbedienungstaste) ein Verriegelungssignal abzugeben. Das bedeutet durch Drücken einer Taste des Schlüssels, wie einer Taste zum Aussenden eines Fernbedienungssignals (z.B. des Verriegelungssignals oder) kann ein deaktivierter Schlüssel wieder aktiviert werden.

Während bei der gerade beschriebenen Ausführungsform nach Erfassen eines geschlossenen Zustands der Tür TFZ das Aussenden der Abfragesignale von der Sendeeinrichtung 19 gestartet wird, ist es gemäß einer weiteren Ausführungsform auch denkbar, das Aussenden der Abfragesignale dann zu starten, wenn ein (z.B. durch Drücken der entsprechend mit dem Aufnehmer 10 verbundenen Fernbedienungstaste getriggertes) Verriegelungssignal eines "aktiv" bzw. als Fernbedienung genutzten Schlüssels von dem Empfänger 23 empfangen wurde. Das Aussenden der Abfragesignale dient nun insbesondere dazu, dass ein sich im Innenraum befindlicher bzw. vergessener Schlüssel sich deaktivieren kann, wie es oben beschrieben wurde. Um hier dem Problem vorzubeugen, dass jedoch keine Deaktivierung bei bzw. nach aktivem Verriegeln auftritt, wird gemäß dieser weiteren Ausführungsform bei einem "aktiv" genutzten bzw. das Verriegelungssignal aussenden elektronischen Schlüssel eine Auswertung bzw. Zählung von den folgenden (auf das Verriegelungssignal getriggerte Abfragesignale) empfangenen Abfragesignalen unterdrückt bzw. unterbrochen. Anders ausgedrückt, der "aktiv" genutzte Schlüssel blendet die empfangenen Abfragesignale aus und deaktiviert sich daher nicht. Dieses Ausblenden der empfangenen Abfragesignale kann dabei insbesondere für eine bestimmte Zeitdauer nach Absenden des Verriegelungssignals erfolgen. Vorteilhafterweise ist diese bestimmte Zeitdauer mindestens solange gewählt, solange das (durch das Verriegelungssignal getriggerte) Aussenden der Abfragesignale andauert (Abfragesignalzeitintervall).

Im Folgenden sollen einige vorteilhafte Ausgestaltungen bezüglich der gerade dargestellten Ausführungsformen eines Zugangsberechtigungssystems kurz dargestellt werden.

Es ist möglich, dass beispielsweise mit einem oder mit allen Abfragesignalen, die vom Fahrzeug FZ bzw. über die Sendeeinrichtung 19 ausgesendet werden, der aktuelle Verriegelungszustand des Fahrzeugs FZ mitgeteilt wird. Diesbezüglich kann auch anstelle des aktuellen Verriegelungszustands des Fahrzeugs der neu (gewollte) Verriegelungszustand (beispielsweise von unverriegelt zu verriegelt) mitgeteilt werden. Kennt nun ein mobiler Identifikationsgeber bzw. mobiler Schlüssel nach auswerten des Abfragesignals den aktuellen Verriegelungszustand oder die gewollte Zustandsänderung, so kann er das entsprechende Signal zur Ver- oder Entriegelung an das Fahrzeug zurück senden.

Außerdem ist es möglich, dass ein Kraftfahrzeugnutzer durch unterschiedliche Betätigung eines Betätigungselements an dem elektronischen Schlüssel unterschiedliche Funktionen (beispielsweise Ver- und Entriegelung, usw.) auslöst. So ist es beispielsweise möglich, dass durch eine einzelne kurze Betätigung der oben erwähnten und nicht dargestellten Fernbedienungstaste, die mit dem Aufnehmer 10 (Figur 1) verbunden ist, beispielsweise direkt ein Entriegelungssignal von dem mobilen Identifikationsgeber ausgesendet wird, während beispielsweise bei einem längeren Betätigen der Fernbedienungstaste oder einem mehrmaligen Betätigen in einem kurzen Zeitintervall ein Verriegelungssignal von dem mobilen Identifikationsgeber zum Fahrzeug gesendet wird.

Zur weiteren Verbesserung der Sicherheit insbesondere bezüglich im Fahrzeuginneren vergessener mobiler Identifikationsgeber bzw. elektronischer Schlüssel ist es denkbar, dass das Steuergerät 16 nach Ablauf eines bestimmten Zeitintervalls nachdem ein Verriegeln des Fahrzeugs festgestellt worden ist (beispielsweise durch einen mit den Steuergerät 16 verbundenem und in den Figuren nicht dargestellten Verriegelungssensor), ein Deaktivierungssignal zum Deaktivieren bzw. Sperren der in einem nahen Empfangsbereich der Sendeeinrichtung 19 (ca. 1-2m um die Sendeeinrichtung 19) befindlichen Identifikationsgeber aussendet bzw. aussenden lässt. Dabei kann zuvor beispielsweise die Verriegelung aufgrund eines Verriegelungssignals eines außenbefindlichen mobilen Identifikationsgebers erfolgt sein oder beispielsweise durch eine mechanische Verriegelung durch den Kraftfahrzeugnutzer. Es wäre diesbezüglich auch denkbar, dass das Steuergerät 16 ohne das Aussenden der vorbestimmten Anzahl von Abfragesignalen nach einer bestimmten Zeitspanne bzw. einem Zeitintervall und nach Erfassen eines Verriegelns zumindest einer Tür des Fahrzeugs das Deaktivierungssignal aussendet.

Soll ein neuer mobiler Identifikationsgeber bzw. elektronischer Schlüssel mit in das oben dargestellte Zugangsberechtigungssystem aufgenommen werden, so muss der neue mobile Identifikationsgeber zunächst angelernt werden. Sollen mehrere mobile Identifikationsgeber angelernt werden, so kann das Problem auftreten, dass die mehreren Identifikationsgeber miteinander kollidieren. Somit wird vorgeschlagen, bei dem Anlernen mehrerer mobiler Identifikationsgeber diese sukzessive bzw. hintereinander anzulernen, um eine Kollision zu vermeiden.

## Patentansprüche

1. Zugangsanordnung (1) für ein Fahrzeug (FZ), mit folgenden Merkmalen:
einer fahrzeugseitigen Sende-/Empfangseinrichtung (19) zum Aussenden einer vorbestimmten Anzahl (VBA) von Abfragesignalen (AS1, AS2 bis AS5) verschiedenen Zwecks;
zumindest einem mobilen Identifikationsgeber (IDI, IDA) umfassend:
eine identifikationsgeberseitige Sende-/Empfangseinrichtung (SE)
zum Empfangen von Abfragesignalen (AS1, AS2) von der fahrzeugseitigen Sende-/Empfangseinrichtung (19), und
zum Zählen der Anzahl (EAZ) von empfangenen Abfragesignalen gleichen Zwecks;
einer identifikationsgeberseitigen Steuereinrichtung (ST) zum Ausgeben eines unterschiedlichen Steuerbefehls (VS, DS) in Abhängigkeit der Anzahl (EAZ) der empfangenen Abfragesignale gleichen Zwecks.

2. Zugangsanordnung nach Anspruch 1, die ferner einen Türsensor (TSS) zum Erfassen eines offenen oder geschlossenen Zustands zumindest einer Tür (TFZ) des Fahrzeugs aufweist, wobei die fahrzeugseitige Sende-/Empfangseinrichtung (19) die vorbestimmte Anzahl (VBA) von Abfragesignalen (AS1, AS2 bis AS5) dann aussendet, wenn ein geschlossener Türzustand von dem Türsensor erkannt wird.

3. Zugangsanordnung nach Anspruch 1, bei der die fahrzeugseitige Sende-/Empfangseinrichtung (19) ferner dafür ausgelegt ist, ein Verriegelungssignal zum Verriegeln von zumindest einer Tür (TFZ) des Fahrzeugs zu empfangen, wobei die fahrzeugseitige Sende-/Empfangseinrichtung (19) die vorbestimmte Anzahl (VBA) von Abfragesignalen (AS1, AS2 bis AS5) ansprechend auf den Empfang des Verriegelungssignals aussendet.

4. Zugangsanordnung nach einem der Ansprüche 1 bis 3, bei der die identifikationsgebeseitige Steuereinrichtung (ST) bei einer Anzahl (EAZ) von empfangenen Abfragesignalen größer oder gleich einer vorbestimmten Mindestanzahl (MAZ) ein Deaktivierungssignal (DS) zum Deaktivieren des zumindest einem mobilen Identifikationsgebers (IDI), insbesondere der identifikationsgeberseitigen Sende-/Empfangseinrichtung, ausgibt.

5. Zugangsanordnung nach Anspruch 1 oder 2, bei der die identifikationsgeberseitige Steuereinrichtung (ST) bei einer Anzahl (EAZ) von empfangenen Abfragesignalen kleiner einer vorbestimmten Mindestanzahl (MAZ) ein Verriegelungssignal (VS) zum Verriegeln von zumindest einer Tür (TFZ) des Fahrzeugs (FZ) ausgibt.

6. Zugangsanordnung nach einem der Ansprüche 1 bis 5, bei der das Aussenden von Abfragesignalen (AS1, AS2 bis AS5) auf ein vorbestimmtes Zeitintervall begrenzt ist.

7. Zugangsanordnung nach einem der Ansprüche 1 bis 6, bei der das Aussenden der Abfragesignale (AS1, AS2 bis AS5) in periodisch sich wiederholenden Zeitintervallen erfolgt.

8. Zugangsanordnung nach Anspruch 4, bei der der mobile Identifikationsgeber ferner ein Betätigungselement (TA) zum Betätigen durch einen Benutzer aufweist, durch dessen Betätigung der zumindest eine mobile Identifikationsgeber (IDI), insbesondere dessen deaktivierte identifikationsgeberseitige Sende-/Empfangseinrichtung (SE), wieder aktivierbar ist.

9. Zugangsanordnung nach einem der Ansprüche 1 bis 8, bei der ein mobiler Identifikationsgeber, der ein Verriegelungssignal zum Verriegeln des Fahrzeugs gesendet hat, für eine bestimmte Zeitdauer keine Abfragesignale empfängt oder auswertet.

10. Verfahren zum Betreiben einer Zugangsanordnung (1) für ein Fahrzeug (FZ), mit folgenden Schritten:
Aussenden einer vorbestimmten Anzahl (VBA) von Abfragesignalen (AS1, AS2 bis AS5) verschiedenen Zwecks seitens des Fahrzeugs (FZ);
Empfangen der Abfragesignale (AS1, AS2 bis AS5) und Zählen der empfangenen Abfragesignale gleichen Zwecks von zumindest einem mobilen Identifikationsgeber (IDI, IDA);
Ausgeben eines unterschiedlichen Steuerbefehls (DS,VS) von dem zumindest einen mobilen Identifikationsgeber in Abhängigkeit einer Anzahl (EAZ) von empfangenen Abfragesignalen gleichen Zwecks.

11. Verfahren nach Anspruch 10, bei dem zunächst ein Schließzustand von zumindest einer Tür (TFZ) des Fahrzeugs (FZ) erfasst wird, und dann die vorbestimmte Anzahl (VBA) von Abfragesignalen (AS1, AS2 bis AS5) seitens des Fahrzeugs (FZ) ausgesendet werden, wenn ein geschlossener Türzustand erfasst wurde.

12. Verfahren nach Anspruch 10, bei dem zunächst ein Verriegelungssignal von dem Fahrzeug empfangen wird, und ansprechend auf das Verriegelungssignal dann die vorbestimmte Anzahl (VBA) von Abfragesignalen (AS1, AS2 bis AS5) seitens des Fahrzeugs (FZ) ausgesendet werden.

13. Verfahren nach Anspruch 10 oder 11, bei dem der mobile Identifikationsgeber (IDA) bei einer Anzahl (EAZ) von emp1fangenen Abfragesignalen kleiner einer vorbestimmten Mindestanzahl (MAZ) ein Verriegelungssignal (VS) zum Verriegeln der zumindest einen Tür des Fahrzeugs ausgibt.

14. Verfahren nach einem der Ansprüche 10 bis 13, bei dem der mobile Identifikationsgeber (IDI) bei einer Anzahl (EAZ) von empfangenen Abfragesignalen größer oder gleich einer vorbestimmten Mindestanzahl (MAZ) ein Deaktivierungssignal (DS) zum Deaktivieren des mobilen Identifikationsgebers ausgibt.

15. Verfahren nach Anspruch 15, bei dem der mobile Identifikationsgeber (IDI) ferner ein Betätigungselement (TA) zum Betätigen durch einen Benutzer aufweist, durch dessen Betätigung der deaktivierte mobile Identifikationsgeber wieder aktivierbar ist.

16. Verfahren nach einem der Ansprüche 10 bis 15, bei dem der mobile Identifikationsgeber (IDI) bei einer Anzahl von empfangenen Abfragesignalen gleich einer vorbestimmen zweiten Mindestanzahl (MAZ) ein zweites Deaktivierungssignal (DS) zum Deaktivieren der Sendefunktion des mobilen Identifikationsgebers ausgibt.

## Claims

1. Access arrangement (1) for a vehicle (FZ), having the following features:
a vehicle-side transmit/receive device (19) to transmit a predetermined number (VBA) of interrogation signals (AS1, AS2 to AS5) of differing purpose;
at least one mobile identification generator (IDI, IDA) comprising:
an identification-generator-side transmit/receive device (SE)
to receive interrogation signals (AS1, AS2) from the vehicle-side transmit/receive device (19), and
to count the number (EAZ) of received interrogation signals of identical purpose;
an identification-generator-side control device (ST) to output a different control command (VS, DS) as a function of the number (EAZ) of received interrogation signals of identical purpose.

2. Access arrangement according to claim 1, which furthermore features a door sensor (TSS) to detect an open or closed state of at least one door (TFZ) of the vehicle, the vehicle-side transmit/receive device (19) transmitting the predetermined number (VBA) of interrogation signals (AS1, AS2 to AS5) when a closed door state is detected by the door sensor.

3. Access arrangement according to claim 1, wherein the vehicle-side transmit/receive device (19) is furthermore designed to receive a locking signal for the locking of at least one door (TFZ) of the vehicle, the vehicle-side transmit/receive device (19) transmitting the predetermined number (VBA) of interrogation signals (AS1, AS2 to AS5) in response to the receipt of the locking signal.

4. Access arrangement according to one of claims 1 to 3, wherein the identification-generator-side control device (ST) outputs a deactivation signal (DS) for the deactivation of the at least one mobile identification generator (IDI), especially the identification-generator-side transmit/receive device, in the event of a number (EAZ) of received interrogation signals greater than or equal to a predetermined minimum number (MAZ).

5. Access arrangement according to claim 1 or 2, wherein the identification-generator-side control device (ST) outputs a locking signal (VS) for the locking of at least one door (TFZ) of the vehicle (FZ) in the event of a number (EAZ) of received interrogation signals lower than a predetermined minimum number (MAZ).

6. Access arrangement according to one of claims 1 to 5, wherein the transmission of interrogation signals (AS1, AS2 to AS5) is limited to a predetermined time interval.

7. Access arrangement according to one of claims 1 to 6, wherein the transmission of the interrogation signals (AS1, AS2 to AS5) takes place in periodically recurring time intervals.

8. Access arrangement according to claim 4, wherein the mobile identification generator furthermore features an actuation element (TA) for actuation by a user, through the actuation whereof the at least one mobile identification generator (IDI), especially its deactivated identification-generator-side transmit/receive device (SE), can be reactivated.

9. Access arrangement according to one of claims 1 to 8, wherein a mobile identification generator, which has sent a locking signal for the locking of the vehicle, does not receive or evaluate any interrogation signals for a specific time period.

10. Method for operating an access arrangement (1) for a vehicle (FZ), comprising the following steps:
transmission of a predetermined number (VBA) of interrogation signals (AS1, AS2 to AS5) of differing purpose on the part of the vehicle (FZ);
receiving of the interrogation signals (AS1, AS2 to AS5) and counting of the received interrogation signals of identical purpose by at least one mobile identification generator (IDI, IDA);
outputting of a different control command (DS, VS) by the at least one mobile identification generator as a function of a number (EAZ) of received interrogation signals of identical purpose.

11. Method according to claim 10, wherein in the first instance a closed state of at least one door (TFZ) of the vehicle (FZ) is detected and the predetermined number (VBA) of interrogation signals (AS1, AS2 to AS5) is then transmitted on the part of the vehicle (FZ), if a closed door state was detected.

12. Method according to claim 10, wherein in the first instance a locking signal is received by the vehicle and in response to the locking signal the predetermined number (VBA) of interrogation signals (AS1, AS2 to AS5) is then transmitted on the part of the vehicle (FZ).

13. Method according to claim 10 or 11, wherein the mobile identification generator (IDA) outputs a locking signal (VS) for the locking of the at least one door of the vehicle in the event of a number (EAZ) of received interrogation signals lower than a predetermined minimum number (MAZ).

14. Method according to one of claims 10 to 13, wherein the mobile identification generator (IDI) outputs a deactivation signal (DS) for the deactivation of the mobile identification generator in the event of a number (EAZ) of received interrogation signals greater than or equal to a predetermined minimum number (MAZ).

15. Method according to claim 15, wherein the mobile identification generator (IDI) furthermore features an actuation element (TA) for actuation by a user, through the actuation whereof the deactivated mobile identification generator can be reactivated.

16. Method according to one of claims 10 to 15, wherein the mobile identification generator (IDI) outputs a second deactivation signal (DS) for the deactivation of the transmit function of the mobile identification generator in the event of a number of received interrogation signals equal to a predetermined second minimum number (MAZ).

## Revendications

1. Agencement d'accès (1) pour un véhicule (FZ), présentant les caractéristiques suivantes :
un dispositif d'émission/réception (19) côté véhicule pour l'émission d'un nombre prédéfini (VBA) de signaux d'interrogation (AS1, AS2 jusqu'à AS5) d'utilisation différente ;
au moins un générateur d'identification mobile (IDI, IDA) comprenant :
un dispositif d'émission/réception côté générateur d'identification (SE)
pour la réception de signaux d'interrogation (AS1, AS2) provenant du dispositif d'émission/réception (19) côté véhicule, et pour le comptage du nombre (EAZ) de signaux d'interrogation reçus d'utilisation identique ;
un dispositif de commande (ST) côté générateur d'identification pour la délivrance d'une instruction de commande (VS, DS) différente en fonction du nombre (EAZ) de signaux d'interrogation reçus d'utilisation identique.

2. Agencement d'accès selon la revendication 1, qui présente également un capteur de porte (TSS) pour l'enregistrement d'un état ouvert ou fermé d'au moins une porte (TFZ) du véhicule, le dispositif d'émission/réception (19) côté véhicule émettant le nombre (VBA) prédéfini de signaux d'interrogation (AS1, AS2 jusqu'à AS5) dans les cas où un état fermé de porte est identifié par le capteur de porte.

3. Agencement d'accès selon la revendication 1, sur lequel le dispositif d'émission/réception (19) côté véhicule est conçu également pour recevoir un signal de verrouillage pour le verrouillage d'au moins une porte (TFZ) du véhicule, le dispositif d'émission/réception (19) côté véhicule émettant le nombre (VBA) prédéfini de signaux d'interrogation (AS1, AS2 jusqu'à AS5) en réponse à la réception du signal de verrouillage.

4. Agencement d'accès selon l'une quelconque des revendications 1 à 3, sur lequel le dispositif de commande (ST) côté générateur d'identification émet, dans le cas d'un nombre (EAZ) de signaux d'interrogation reçus supérieur ou égal à un nombre minimum (MAZ) prédéfini, un signal de désactivation (DS) pour la désactivation du au moins un générateur d'identification (IDI) mobile, en particulier du dispositif d'émission/réception côté générateur d'identification.

5. Agencement d'accès selon la revendication 1 ou 2, sur lequel le dispositif de commande (ST) côté générateur d'identification émet, dans le cas d'un nombre (EAZ) de signaux d'interrogation reçus inférieur à un nombre minimum (MAZ) prédéfini, un signal de verrouillage (VS) pour le verrouillage d'au moins une porte (TFZ) du véhicule (FZ).

6. Agencement d'accès selon l'une quelconque des revendications 1 à 5, sur lequel l'émission de signaux d'interrogation (AS1, AS2 jusqu'à AS5) est limitée à un intervalle de temps prédéfini.

7. Agencement d'accès selon l'une quelconque des revendications 1 à 6, sur lequel l'émission des signaux d'interrogation (AS1, AS2 jusqu'à AS5) s'effectue à des intervalles de temps se répétant périodiquement.

8. Agencement d'accès selon la revendication 4, sur lequel le générateur d'identification mobile présente également un élément d'actionnement (TA) destiné à être actionné par un utilisateur, par l'actionnement duquel le au moins un générateur d'identification mobile (IDI), en particulier son dispositif d'émission/réception (SE) désactivé côté générateur d'identification, peut être à nouveau activé.

9. Agencement d'accès selon l'une quelconque des revendications 1 à 8, sur lequel un générateur d'identification mobile, qui a envoyé un signal de verrouillage pour le verrouillage du véhicule, ne reçoit ou n'analyse pas de signaux d'interrogation pour une durée limitée.

10. Procédé pour le fonctionnement d'un agencement d'accès (1) pour un véhicule (FZ), présentant les étapes suivantes :
émission d'un nombre (VBA) prédéfini de signaux d'interrogation (AS1, AS2 jusqu'à AS5) d'utilisation différente de la part du véhicule (FZ) ;
réception des signaux d'interrogation (AS1, AS2 jusqu'à AS5) et comptage des signaux d'interrogation reçus d'utilisation identique d'au moins un générateur d'identification mobile (IDI, IDA) ;
délivrance d'une instruction de commande (DS, VS) différente par le au moins un générateur d'identification mobile en fonction d'un nombre (EAZ) de signaux d'interrogation reçus d'utilisation identique.

11. Procédé selon la revendication 10, dans lequel tout d'abord un état de fermeture d'au moins une porte (TFZ) du véhicule (FZ) est enregistré, et ensuite le nombre (VBA) prédéfini de signaux d'interrogation (AS1, AS2 jusqu'à AS5) est envoyé par le véhicule (FZ) lorsqu'un état fermé de porte a été détecté.

12. Procédé selon la revendication 10, dans lequel d'abord un signal de verrouillage est reçu du véhicule et, en réponse au signal de verrouillage, le nombre (VBA) prédéfini de signaux d'interrogation (AS1, AS2 jusqu'à AS5) est envoyé alors par le véhicule (FZ).

13. Procédé selon la revendication 10 ou 11, dans lequel le générateur d'identification mobile (IDA) délivre pour un nombre (EAZ) de signaux d'interrogation reçus inférieur à un nombre minimum (MAZ) prédéfini un signal de verrouillage (VS) pour le verrouillage de la au moins une porte du véhicule.

14. Procédé selon l'une quelconque des revendications des revendications 10 à 13, avec lequel le générateur d'identification mobile (IDI) émet pour un nombre (EAZ) de signaux d'interrogation reçus supérieur ou égal à un nombre minimum prédéfini (MAZ) un signal de désactivation (DS) pour la désactivation du générateur d'identification mobile.

15. Procédé selon la revendication 15, dans lequel le générateur d'identification mobile (IDI) présente un élément d'actionnement (TA) destiné à être actionné par un utilisateur, par l'actionnement duquel le générateur d'identification mobile désactivé peut être à nouveau activé.

16. Procédé selon l'une quelconque des revendications 10 à 15, dans lequel le générateur d'identification mobile (IDI) émet, pour un nombre de signaux d'interrogation reçus identique à un second nombre minimum prédéfini (MAZ), un second signal de désactivation (DS) pour la désactivation de la fonction d'émission du générateur d'identification mobile.
